# EUROPEAN PATENT APPLICATION

(11) **EP 1 262 890 A1**
(43) Date of publication of application: **04.12.2002**
(21) Application number: 01830322.2
(22) Date of filing: 21.05.2001
(51) Int. Cl.: G06F 17/60

(54) **System for online checking of the life of a food product at purchase time**

(71) Applicant: Consorzio Agrario Provinciale di Piacenza, 29100 Piacenza (IT)
(72) Inventor: Colpani, Giuseppe, 29100 Piacenza (IT)
(74) Representative: Modiano, Guido, Dr.-Ing.

(57) **Abstract**

A system for checking the life of a food product, comprising the steps of:
detecting an identification element which is applied to the product;
accessing a data communications network by means of the identification element;
accessing, by means of the data communications network, a plurality of information items related to the life of the product, ranging from the raw materials used to produce the product to the certifications to which the product has been subjected.

## Description

The present invention relates to a system for online checking of the life of a food product at purchase time.

More particularly, the invention relates to a system which allows traceability of the life of a food product at purchase time or at a later time.

It is known that one of the problems currently most strongly felt is the assurance of optimum quality of food products; for this purpose, each producer is keen to provide as much information as possible to the end customer in order to reassure him regarding the safety and genuineness of the products he is purchasing.

However, the information that can be placed on a product, i.e., on the label that is present on the package of the product, is clearly not exhaustive, since it is generally limited to its weight, composition, best-before date and the like. However, for example in the case of dairy products there is absolutely no information regarding the origin of the milk used to produce the food product, the sanitary tests conducted on the components of the product, preservation methods, cooking methods, certificates of origin, veterinary certificates and the like.

Substantially, what the consumer demands for his own assurance when he purchases a product is to be informed regarding the actual origin of the product and regarding a plurality of additional items of information which can allow to form a clear picture of the life of the product.

Currently, this product traceability is not available, neither at purchase time or after, for example by accessing a data communications network such as the Internet.

The aim of the present invention is to provide a system for online checking of the life of a food product which allows the consumer to trace the life of a product at purchase time or optionally at a later time.

Within this aim, an object of the present invention is to provide a system for checking the life of a product, particularly a food product, which allows the consumer and the authorities assigned to checking the quality of food products to know in depth the production methods, the sanitary tests conducted on the products, and the origin of the raw materials of which the product is made.

Another object of the present invention is to provide a system for online checking of the life of a product which is highly reliable, relatively simple to provide and at competitive costs.

This aim and these and other objects which will become better apparent hereinafter are achieved by a system for checking the life of a food product, comprising the steps of:
detecting an identification element which is applied to the product;
accessing a data communications network by means of said identification element;
accessing, by means of said data communications network, a plurality of information items related to the life of the product, ranging from the raw materials used to produce the product to the certifications to which the product has been subjected.

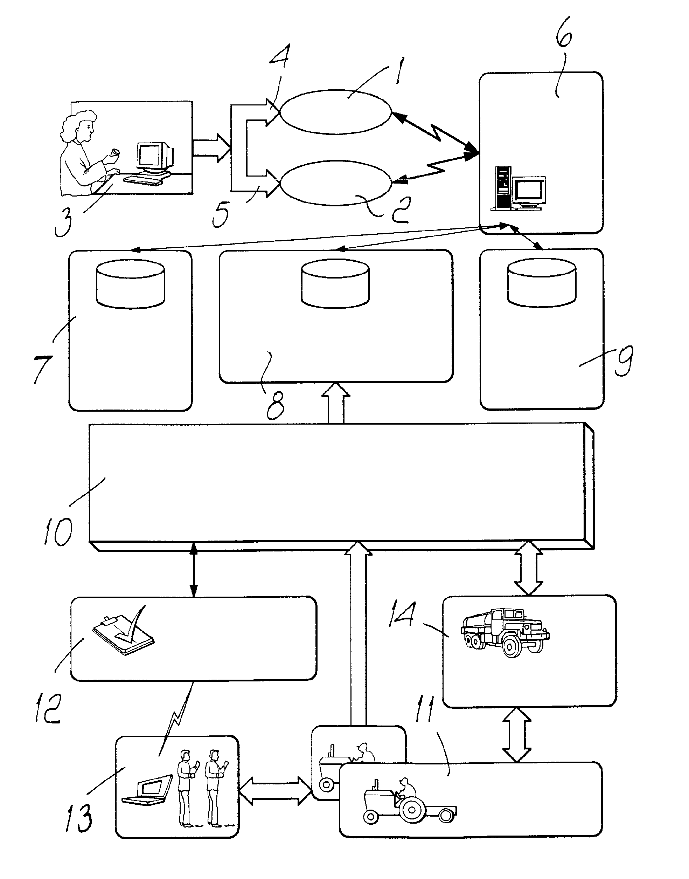

Further characteristics and advantages of the invention will become better apparent from the description of preferred but not exclusive embodiments of the system according to the present invention, illustrated only by way of non-limitative example in the accompanying drawings, wherein the only figure is a block diagram of the checking system according to the present invention.

With reference to the figure, the checking system according to the present invention uses, as the core of the system, an element for identifying the product in encoded form, such as for example a bar code, which is adapted to be applied to the product.

The bar code, after being read for example by means of a bar code reader 1, or after being entered, after connecting to a site 2 of a data communications network, for example from home, allows to access a plurality of items of information regarding the life of the product, as described in detail hereinafter. In particular, therefore, the user 3, directly at a point of sale 4 or from his own home 5, can know product information which is adapted to ensure its quality and protect the end consumer.

In particular, the bar code allows to access directly or indirectly a data communications network, such as for example the Internet, by means of a server 6, which thus gives access to a plurality of information items 7, 8 and 9 related to the product whose bar code has allowed access to said information.

Substantially, the information linked to a bar code is univocally specific for that bar code and any user 3 who requests information regarding that given product will be provided with the same information.

In particular, the information that can be obtained regarding the product can relate to disciplinary and legislative information 7, information regarding producers, technologies and processes, preservation methods, nutritional information, cooking methods, laws and decrees, life, photographs, et cetera 8, or information regarding certificates of origin, certificates of certification authorities, veterinary certificates, notarial certificates and the like, the latter information being designated by the reference numeral 9.

The information items 7, 8 and 9, which constitute three separate data banks, are created by a service center 10 which receives information directly from the producers 11, from quality control authorities 12 which employ onsite testing teams 13, and from carriers 14 which thus allow to have tracing of the goods during transport.

The system according to the invention thus allows any consumer to know in real time, at purchase time or at a later time, by using a data communications network, information related to the product which is not limited to its country of origin, its distributor and its producer, but includes information related in detail to the quality of the product, the certifications performed on said product, and the certification of the individual ingredients that compose the product that have contributed to determine them.

This allows to provide the consumer with a very broad range of information, thus giving the consumer the feeling of protection and assurance in purchase.

In practice it has been observed that the system according to the invention fully achieves the intended aim and objects, since it allows to check the life of a product, both at purchase time and at a later time, directly from home, simply by using the bar code applied to the product in order to access said information.

The system thus conceived is susceptible of numerous modifications and variations, all of which are within the scope of the inventive concept. All the details may further be replaced with other technically equivalent elements.

Where technical features mentioned in any claim are followed by reference signs, those reference signs have been included for the sole purpose of increasing the intelligibility of the claims and accordingly such reference signs do not have any limiting effect on the scope of each element identified by way of example by such reference signs.

## Claims

1. A system for checking the life of a product, **characterized in that** it comprises the steps of:
detecting an identification element which is applied to the product;
accessing a data communications network by means of said identification element;
accessing, by means of said data communications network, a plurality of information items related to the life of the product, ranging from the raw materials used to produce the product to the certifications to which the product has been subjected.

2. The system according to claim 1, **characterized in that** said product identification element applied to the product is a bar code.

3. The system according to claim 1, **characterized in that** said product identification element is read by means of a reader directly at the point of sale.

4. The system according to claim 1, **characterized in that** said product identification element is read by the consumer at home after purchase.

5. The system according to one or more of the preceding claims, **characterized in that** said information regarding the product is divided into legal disciplinary information and information regarding production batches, certification of ingredients and registration documents, information regarding producers, preservation methods, nutritional information, cooking methods, laws and decrees, and information regarding the certificates of origin, certificates of certification authorities, veterinary certificates, and notarial certificates.

6. The system according to one or more of the preceding claims, **characterized in that** said information is collected by a service center where information entered by the producers of each raw material, by certification authorities and by product carriers are collected.
